# EUROPEAN PATENT APPLICATION

(11) **EP 2 301 803 A1**
(43) Date of publication of application: **30.03.2011**
(21) Application number: 09171683.7
(22) Date of filing: 29.09.2009
(51) Int. Cl.: B60R 1/06

(54) **Self substaining rear view mirror**

(71) Applicant: SMR Patents S.à.r.l., 1653 Luxembourg (LU)
(72) Inventor: Schmierer, Arne, 73230 Kirchheim (DE)
(74) Representative: Rausch, Gabriele

(57) **Abstract**

A rear view mirror device is proposed that generates internally a power at least based on one type of power harvesting tools as vibration energy recovering, solar energy, wind energy. The electrical energy is used to feed the electrical consumers in a rear view mirror and to provide signal transfer wireless to the vehicle board system.

## Description

Rear view mirrors for automotive use comprises a lot of electrical devices as a lighting means for indication of direction turns or warning signals, illuminations of vehicle surroundings or day running light, mirror glass actuators, electro chromic dimming features, heating, sensors and cameras for different use.

The electrical consumption of a fully equipped rear view mirror can exceed to several watts.

For the on board power supply of a vehicle is shut down when initiation stops it is one need to supply rear view mirror functions as the power fold function to store mirror close to vehicles' contour after initiation stops.

Further on the power supply of the vehicle connected to the rear view mirror should be cut off during parking to avoid power loss by a defective device. On the other hand a powered rear view mirror during parking can help to give warning signals or illumination before the vehicle starts.

For rear view mirrors with smaller energy consumption requests a self sustaining rear view mirror is a good solution which eases the electrical harness in the rear-view mirror.

The solution includes elements of energy harvesting that involves the use of ambient energy sources to produce power.

Using ambient energy sources to produce power may allow the use of self-powering circuits and enables the use of low power sensing monitoring, communication, computation, actuation and control applications. Mechanical vibration is a potential power source that is converted into electrical energy through micro-electromechanical systems (MEMS) technology. Ambient vibration energy sources include, for example, car engine compartments, car instrument panels, wind vibration at the rear view mirror, door closing etc.

Examples of energy harvesters that are currently in use include solar panels as used in US4327316 for powering battery at a rear view mirror, shoe inserts (used in military applications), electromagnetic fields -used in radio frequency identification device (RFID) tags-, and vibrations used in tire pressure sensors as WO2008107213, for monitoring motor vibrations.

Vibration energy harvesters can be based on electromagnetic, electrostatic or piezoelectric mechanisms. Electromagnetic mechanisms function by the relative motion between a wire coil and a magnetic field which causes a current to flow in the coil. One of the advantages of electromagnetic mechanisms is that no voltage source is needed to get the process going; however, a disadvantage is that the output voltage is limited to about 0.1-0.2 volts. Electrostatic mechanisms use a variable capacitor, and the maximum capacitance determines the maximum output voltage. Electrostatic mechanisms have the advantage of being easier to integrate into micro systems, but disadvantages resulting from the low breakdown voltage between the capacitor plates typically limit the energy levels harvested. For maximum energy extraction capacitance change needs to be maximized at each oscillation cycle, which requires the plates to be as close to each other as possible. On the other hand, if the plates are too close together or if the voltage gets too high, air will breakdown and temporarily conduct, resulting in the loss of the charge that was stored in the capacitor.

Piezoelectric materials are ideal candidates for harvesting power from ambient vibration sources because they can efficiently convert mechanical strain to an electrical signal. Piezoelectric mechanisms function by using a stress change to generate a voltage.

With piezoelectric devices, voltage source is needed to initiate energy extraction, and an output voltage of about 1-8 volts can be generated. However, a disadvantage is that conventional piezoelectric mechanisms can be somewhat difficult to integrate into micro systems.

A self-powering sensor arrangement with wireless communication would greatly minimize the complexity and cost of monitoring and control while at the same time enhancing reliability and flexibility. Because vibration energy is mostly present at low frequencies and large amplitudes (tens of microns or more), it would be desirable to incorporate the sensor arrangement with a novel piezoelectric energy harvester to create a device that stores energy from the ambient deflections at a given low frequency in an optimal manner. This typically requires large nonlinear deflections.

Other ways of harvesting energy, especially at the micro-scale, have focused on capacitative (electrostatic) or magnetic schemes. However, typical device sizes that can achieve Micro Watts of energy are on the order of centimetres, and scaling these devices to smaller sizes reduces the power harvested accordingly.

In order to harvest the maximum energy possible, the deflection amplitude of the suspended mass needs to be maximized and the frequency should be as high as possible.

Recent developments disclose piezoelectric materials of thin film converting mechanical to electrical energy with high efficiencies if only a monometer film is used. Alternatively piezoelectric ceramic fibres are used in composite materials to produce electrical energy. With a high Curie temperature the use of these fibres is possible in normal injection moulded materials as PMMA used for rear view mirror housings.

The energy consumption of a rear view mirror is not constant. For a turn signal indicator LEDs with a power of 15 W are commonly used and several LED are arranged to optimize the lighted area. The LENDS are turned on and off and the whole power consumption is about milli-watts in average.

Also other consumers in the rear view mirror are not active continuously. The intention of power harvesting is also to store the energy in a battery.

It is known from US 7 318 648 to use a photo sensor to produce a current and to store energy in battery in a interior rear view mirror.

It is another intention of the application to maintain "wireless" rear view mirror even in the case information must be sent to vehicle board system. For this purpose the rear view mirror contains a transponder system with a short range transmission system to allow the communication with the vehicle. For example the rear view mirror reflective part is controlled and activated by driver using a on board switch and control. This switch is connected to a transmitter device that sends the control signal to a receiver in the rear view mirror that decodes the signal and uses it to actuate the mirror glass.

It is another intention of the invention to use wind energy that comes up during driving a vehicle. The energy is applied to spin a propeller or a turbine to derive electrical energy from the mechanical rotation.

The intention of the invention is in addition to use more than one system and to combine the energy harvesting tools in a way that they complete another in their functions.

### Short description of the invention

The invention is shown the figures and described in detail thereafter.

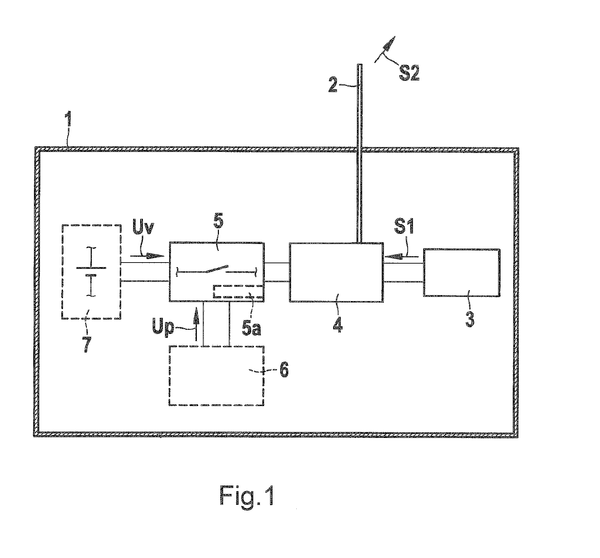

Figure 1 shows a power harvesting module
Figure 2 shows a rear view mirror with a power harvesting module.
Figure 3 is a cross section of the mirror housing cover
Figure 4 is a view on the rear side of a rear view mirror assembly
Figure 5 shows an opening for wind energy harvesting
Figure 6 shows an embodiment with wind harvesting device between attachments

The energy harvesting module 1 of this embodiment comprises a consumer 3 which is connected to a controller 4. The controller 4 and the consumer 3 are connected to a power harvesting device 6 that loads a battery 7 via a switch 5. Controller 4 is also connected to an antenna 2 to emit and receive data and to provide the control signals to consumer 3.

A consumer is every electrical component that must by supplied by electrical energy in the rear view mirror as lighting means for indication of direction turns or warning signals, illuminations of vehicle surroundings or day running light, mirror glass actuators, power fold actuators, electro chromic dimming features, heating, sensors and cameras for different use, warning indicators, all types of illumination in addition. In this embodiment all elements are integrated in one module 1, in alternative embodiments the elements are mounted separately in the rear view mirror.

In another embodiment the control signals are not transmitted via a radio connection but by electrical wiring. This wiring can be a standard electrical connection or a bus connection to the vehicle as a LIN-Bus a CAN bus or K-Line or FlexRay.

The power harvesting devices are out of a group of physically possible energy harvesting devices recovering wind energy, solar energy, piezo-electrical energy, radio energy or combination of these energies. Especially the combination of different energies to be recovered is successful for self sustainable rear view mirror. The combination of energies equalizes weaknesses of a single system by strengths of another. As an example the solar energy harvesting is only efficient during daytimes. The combination with a wind energy tool or with piezo energy recovery is helpful. The combination allows using energy harvesting devices that are designed in an simple way. It is not the intention to have high end solutions and high energy efficient tools, but simple cost optimized tools that allows to supply the user sin the rear view mirror.

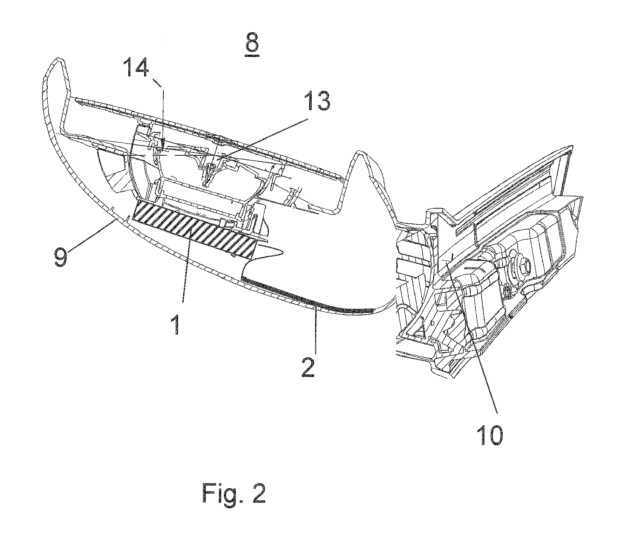

Fig. 2 shows a rear view mirror 8 with a mirror head 9 and a mirror base 10. The mirror head 9 surrounds a reflective element 14 that is actuated with a glass actuator 13. The power harvesting module 1 is implemented on top of the glass actuator 13 in this embodiment and connected to the antenna 2. The antenna is a film or a coating of the plastic cover of the rear view mirror head. The power harvesting device 6 is integrated in the module 1, which includes also a battery and the controller for controlling the device. The only connection to the vehicle is the radio link between mirror and vehicle controllers. The signals exchanged are control signals and the power of the signals needed is low. The position on top of the glass actuator is an advantage for the actuator need to be controlled, The connection for a heater can be go through the actuator in one embodiment form the position on top of the actuator the wiring length to heater and /or electro dimmable mirror and turn signal indicator is not very long.

In another embodiment of the invention the radio connection is adapted to use a strong radio source for powering the consumers of the rear view mirror. The radio power harvesting is a good additional source of energy that could be used twice: for energy transfer and for controlling the consumers of the rear view mirrors.

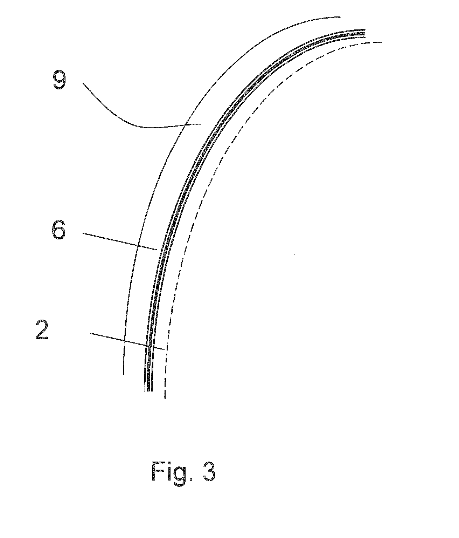

In another embodiment of Fig. 3 the power harvesting device is integrated into the mirror cover itself with piezoelectric functionality realized as a coated film 6 or piezoelectric fibres.in the cover material. The piezo thin film 6 is overlaid by contacts 15 and by metal structures to build an antenna 2.

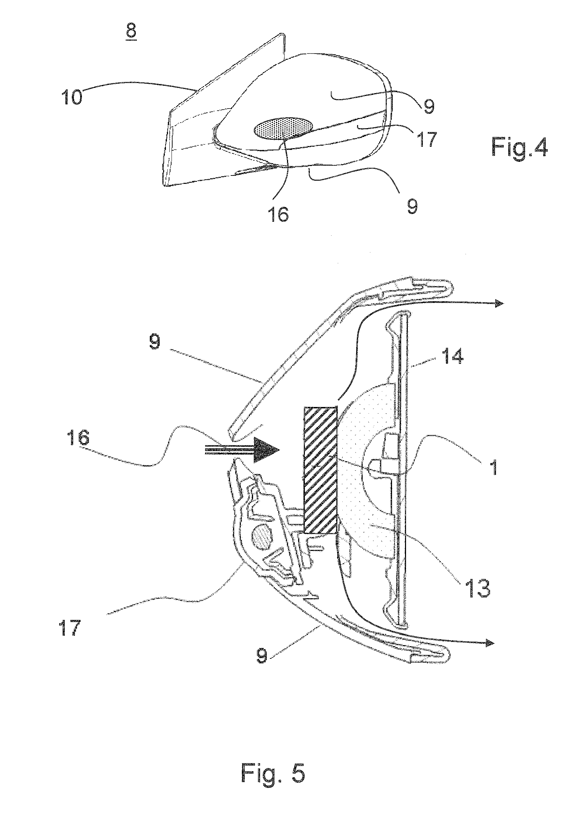

Figure 4 shows an alternative energy harvesting device with a rear view mirror assembly 8 comprising a mirror base 10 and a mirror head 9, a turn signal indicator 17 and an opening 16. The opening is a indentation of the mirror housing used as wind inlet opening. The idea is to concentrate the wind power during driving onto a wind power device to drive an air turbine or propeller blades.

Figure 5 shows an example of a propeller solution with the air opening 16 at the rear side of mirror housing 9. The opening is constructed as a guide for the wind and a concentrator to the module in that case a wind power device 1 including propeller blades. Wind energy is modified into electrical current by the spinning blades and stored in a battery in the module 1.

The opening in the housing 1 is optimized for the wind energy and adapted to have a laminar air flow. This helps to reduce wind noise in the device. The wind is blowing according arrows through the blades and streams around the reflective element 14 The low pressure due to this air flow in front of the reflective element 14 helps to protect the mirror from droplets and dirt.

In another embodiment wind opening 16 is designed as a couple of openings arranged over an area of the rear view mirror housing, e.g. along a turn signal indicator , along a separation line between upper and lower mirror cover, or in other positions.

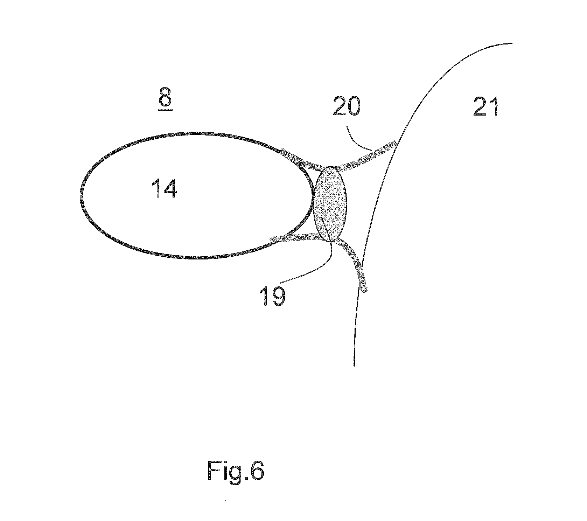

A different position of the wind energy device 19 is shown in figure 6. The wind energy device is mounted between two arms 20 that connect the mirror head with a vehicle 21. This design allows the installation of a wind turbine outside mirror head.

Another embodiment of the invention is able to recover energy from a radio signal. This is possible using a short dedicated transmitter-receiver structure that does not influence other consumers in the vehicle. The radio source can be a vehicle internal source. Another possibility is to use a source outside the vehicle as a bake, or a traffic signal adapted to feed vehicles by radio transmission.

The rear view mirror assembly need an antenna and a controller for the antenna signal to recover the electrical power and store it in the battery.

## Claims

1. Rear view mirror assembly (8) prepared to be fixed to a vehicle with at least one electrical consumer (3, 13) out of the list of turn signal indicator, security light, position light, running light, warning indicator, glass actuator, power fold actuator, heater, transponder, sensors, cameras, controllers, **characterized in that** the rear view mirror assembly (8) has a power harvesting system (6) using at least one device out of the group of piezoelectric power harvesting, wind turbulence recovering, radio energy recovery and a power storage mean (7) to build a self sustaining device.

2. Rear view mirror assembly (8) according claim 1 **characterized in that** a first energy harvesting device is combined with a second harvesting device, out of the group of devices of claim1.

3. Rear view mirror assembly (8) according claim 1 **characterized in that** the second harvesting device is a photovoltaic system.

4. Rear view mirror assembly according claims 1 to 3, **characterized in that** the assembly comprises a piezoelectric film coated at least partly into the rear view mirror housing (9).

5. Rear view mirror assembly according claim 1 to 4, **characterized in that** the plastic material of the assembly (8) comprises at least in some areas piezoelectric ceramic fibres for energy recovering out of vibration of the assembly.

6. Rear view mirror assembly according claim 4, **characterized in that** at least parts of the assembly are coated with metal to implement contact and/or antennas material.

7. Rear view mirror assembly according claim 1, **characterized in that** the rear view mirror comprises a power harvesting module (1) including a power harvesting device (6), a controller (4), a power storage mean (7), an antenna (2) and a consumer (3).

8. Rear view mirror assembly (8) according claim 1 **characterized in that** the rear view mirror has an opening as wind inlet and a wind outlet around an reflective element (14)

9. Rear view mirror assembly (8) according claim 8 **characterized in that** the opening is adjacent to a wind energy recovery element (19) comprising a air propeller mounted in the mirror housing.

10. Rear view mirror assembly (8) according claim 1 **characterized in that** a turbine (19) is mounted outside the mirror head (9).

11. Rear view mirror assembly (8) according claim 1 **characterized in that** the rear view mirror include at least one antenna to recover radio energy from vehicle or a fixed support station.

12. Method to create a self sustaining rear view mirror in using an energy recovery method implemented to support internal consumers, as piezoelectric power harvesting, wind turbulence recovering, radio energy recovery.

13. Rear view mirror assembly according claim 1, **characterized in that** the elements of the self sustaining mirror as a power harvesting device (6), a controller (4), a power storage mean (7), an antenna (12) and a consumer (3) are mounted separately.
